# EUROPEAN PATENT SPECIFICATION

(11) **EP 1 670 240 B1**
(45) Date of publication and mention of the grant of the patent: **26.09.2012**
(21) Application number: 05026883.8
(22) Date of filing: 08.12.2005
(51) Int. Cl.: G02B 7/04, G02B 7/02, H04N 5/225

(54) **Fixing structure for camera module, fixing method therefor, and mobile terminal using the same**
Fixierstruktur für ein Kameramodul, Fixierverfahren dafür und mobiles Endgerät mit dieser Struktur
Structure de fixation pour un module de camera, procédé de fixation associé et terminal mobile l'utilisant

(30) Priority: 08.12.2004 JP 2004354772
(43) Date of publication of application: 14.06.2006
(73) Proprietor: NEC Corporation, Minato-ku Tokyo 108-8001 (JP)
(72) Inventor: Tsutsui, Takashi, Kakegawa-shi Shizuoka (JP)
(74) Representative: von Samson-Himmelstjerna, Friedrich

(56) References cited:
- US-A1- 2004 021 792
- US-A1- 2004 075 620
- US-A1- 2004 095 500
- US-A1- 2004 106 440
- US-B1- 6 507 700
- PATENT ABSTRACTS OF JAPAN vol. 2003, no. 12, 5 December 2003 (2003-12-05) -& JP 2004 200944 A (NEC ACCESS TECHNICA LTD), 15 July 2004 (2004-07-15)

## Description

### BACKGROUND OF THE INVENTION

### 1. Field of the Invention

The present invention relates to a fixing structure for a camera module, a fixing method therefor, and a mobile terminal using the same. More specifically, the present invention concerns an improvement in the fixing of the camera module in a mobile phone.

### 2. Description of the Related Art

In recent years, the portable information processing terminal typified by the mobile phone has been predominated by one having a camera function. In such a portable terminal, a mounting method has been used in which a camera is rendered as a miniature module, and an FPC (flexible printed circuit) substrate is led out from this module to connect with a printed circuit board using a connector or the like. Examples of such camera modules are disclosed in Japanese Unexamined Patent Application Publication Nos. 2002-185827 and 2004-200944.

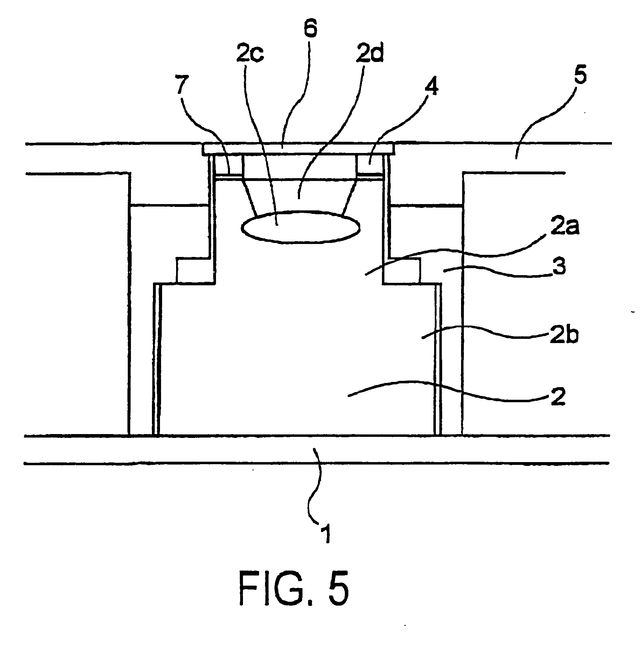

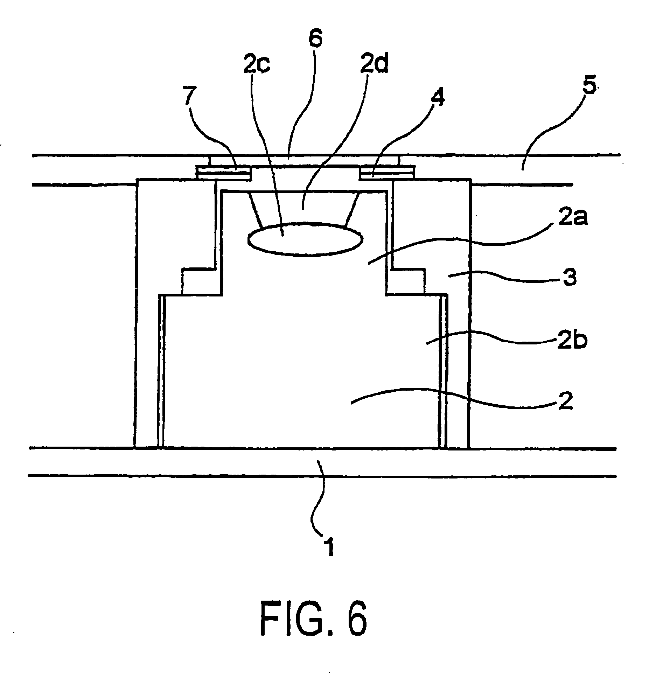

Figs. 5 and 6 are each a sectional view explaining a conventional method for fixing a camera module to a camera module fixing apparatus. Referring first to Fig. 5, a camera module 2 is fixed between a substrate 1 of the apparatus and the apparatus enclosure 5. Specifically, the camera module 2 is held by being inserted into a camera module holding frame 3 for holding the camera module, and the camera module holding frame 3 is sandwichedly fixed between the substrate 1 and the apparatus enclosure 5.

The camera module 2 comprises a lens barrel portion 2a, base portion 2b, lens 2c, and lens hole 2d, which constitutes an opening located above the lens 2c. The lens 2c is incorporated into the lens barrel portion 2a having the lens hole 2d. The camera module holding frame 3 (hereinafter, abbreviated as a "holding frame") is configured so that the camera module 2 can be press-fitted thereinto from below. After the camera module 2 has been press-fitfied into the holding frame 3, an upper portion of the lens barrel portion 2a projects from an upper part of the holding frame 3. On the top surface of the projecting portion of the lens barrel portion 2a, there is provided a double-sided tape 7, which adheres a cushion 4 for dust prevention, to the top surface of the lens barrel portion 2a. This cushion 4 is constituted of an elastic material such as rubber and sponge. A screen 6 mounted to the apparatus enclosure 5 is located on the top surface of the cushion 4.

Referring next to Fig. 6, parts equivalent to those in Fig. 5 are designated by the same reference numerals. In this sample, a double-sided tape 7 is provided on the bottom surface of each of the apparatus enclosure 5 and the screen 6. On the top surface of the holding frame 3, there is provided a cushion 4, which is adhered by the double-sided tape 7. Other constructions are the same as those in Fig. 5. Here, the screen 6 is a transparent flat plate made of acrylic, and used for preventing the intrusion of dust or the like from the outside.

In the structure shown in Fig. 5, a doughnut-shaped cushion 4 is stuck to the top surface of the lens barrel portion 2a of the camera module 2 by the double-sided tape 7. Hence, there is no method for positioning the cushion 4. This undesirably results in very low work efficiency. Furthermore, since the sticking accuracy of the cushion 4 is poor, the hermeticity between the screen 6 and the lens 2c is disadvantageously bad. Moreover, since this mounting method is one in which a shock or pressure is directly applied to the outer peripheral surface of the lens barrel portion 2a of the camera module 2, the lens barrel portion 2a of the camera module 2 is prone to be directly subjected to a load, thereby causing a problem in that a risk of destroying the camera module 2 is incurred.

In the structure shown in Fig. 6, one side of a double-sided tape 7 is applied on the bottom surface of each of the apparatus enclosure 5 and the screen 6. The other side of the double-sided tape 7 is applied on the cushion 4. The double-sided tape 7 and the cushion 4 is press-fitted between the holding frame 3 and the screen 6. Such a method does eliminate the gap between the apparatus enclosure 5 and the holding frame 3, but because there exists a gap between the lens barrel portion 2a of the camera module 2 and each of the holding frame 3 and the screen 6, foreign matter such as refuse or dust from inside the apparatus unfavorably intrudes into the gap and the lens hole 2d along the outer peripheral portion of the lens barrel portion 2a.

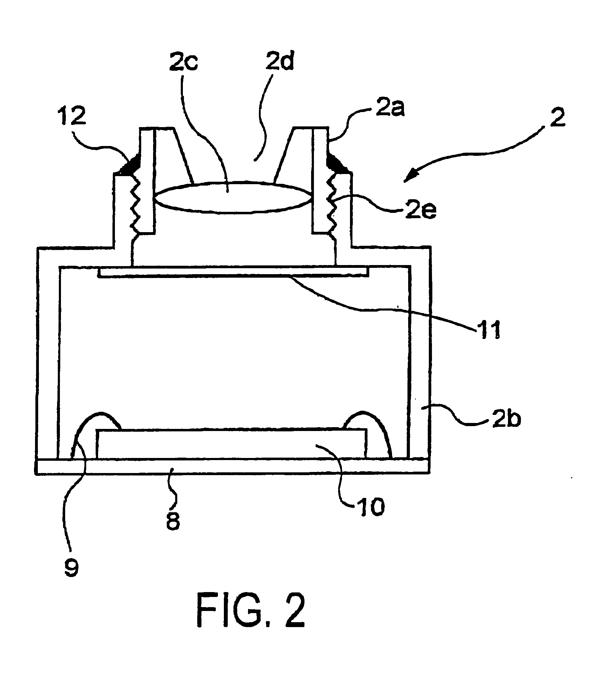

Also, in the structure shown in Fig. 6, a screw portion (refer to a thread portion 2e in Fig. 2) is formed at the outside of the lens portion and the inside of the lens barrel portion 2a of the camera module 2, and this camera module 2 is configured to fit the lens portion into the lens barrel portion while screwing the lens portion. After having fitted the lens portion into the lens barrel portion, an adhesive is poured into a very small gap existing in the screw portion formed between the lens portion and the lens barrel portion, for fixing. Therefore, the penetration area of the adhesive has no choice but to become small. As a result, an application of a shock or pressure to the lens barrel portion 2a from the lens optical axis direction or a lateral direction becomes prone to put a load on the apparatus via the cushion 4, so that the lens portion that should be fixed is subtly turned, resulting in the occurrence of an out-of-focus state or module failure.

US 2004/0021792 A1 discloses an arrangement for fixing a camera unit in a mobile communication terminal wherein a cushion for impact damping is disposed in between an enclosure of the terminal and a camera unit.

US 2004/095500 A1 discloses an arrangement for fixing a camera module in an mobile device terminal wherein a camera body is held and fixed through a cushion member contacting the camera body.

### SUMMARY OF THE INVENTION

Accordingly, the present invention is directed to a fixing structure for a camera module, a fixing method therefor, and a mobile terminal using the same that protect the lens portion of the camera module from the attachment thereto of refuse or dust, and that prevents the lens barrel portion thereof from being subjected to a load by shock or pressure.

The present invention is further directed to a fixing structure for a camera module, a fixing method therefor, and a mobile terminal using the same that allow assembling work to be easily performed without any need for positioning of the cushion.

To solve the above object, the present invention provides subject-matters according to the independent claims. Preferred embodiments thereof are defined in the dependent claims.

In the following, aspects of the present invention are discussed.

In a first aspect, the present invention provides a camera module fixing structure configured to fix a camera module to an apparatus by holding a camera module by a holding frame, and sandwichingly fixing the holding frame between a substrate and an enclosure of the apparatus. This camera module fixing structure has a cushion fitted over the outer peripheral surface of a lens barrel portion of the camera module, and when the holding frame is sandwichedly fixed between the substrate and the enclosure of the apparatus, the cushion is press-fitted between the holding frame and the enclosure.

In a second aspect, the present invention provides a mobile phone using the above-described camera module fixing structure.

In a third aspect, the present invention provides a camera module fixing method in which a camera module is fixed to an apparatus by holding a camera module by a holding frame, and sandwichingly fixing the holding frame between a substrate and an enclosure of the apparatus, This method includes a step of inserting the camera module into the holding frame, a step of fitting a cushion over the outer peripheral surface of a lens barrel portion of the camera module, and a step of press-fitting the cushion between the holding frame and the enclosure of the apparatus while sandwichingly fixing the holding frame between the substrate and the enclosure of the apparatus.

According to the present invention, a camera module fixing structure is configured so that a cushion is fitted over the outer peripheral surface of the lens barrel portion of the camera module, and that the cushion is press-fitted between the camera module holding frame and the apparatus enclosure while sandwichedly fixing the holding frame between a substrate and an apparatus enclosure. This completely eliminates the need for positioning the cushion. Further, the cushion is elastic. The press-fitted cushion is elastically deformed and keeps to closely contact the lens barrel portion, the camera modulue holding frame and the apparatus enclosure. As a result, the cushion prevents refuse or dust from intruding in the lens hole, For example, it is assumed that voids occur between a base portion of the camera module and the camera module holding frame when external force is applied to the appratus. In this case, although refuse or dust may intrude in a space between the lens barrel portion and the camera module holding frame, the cushion blocks intrusion of the refuse or dust into the lens hole.

Moreover, according to the present invention, the adoption of the above-described arrangement prevents the lens barrel portion from being directly subjected to a load even if a shock or pressure through the screen is applied. This allows a reliable protection of the lens barrel portion, and produces the effect of preventing an out-of-focus state or module failure.

### BRIEF DESCRIPTION OF THE DRAWINGS

Fig. 1 is a sectional view of a camera module fixing structure according to a first embodiment of the present invention.
Fig. 2 is a sectional view of the camera module used for the present invention.
Fig. 3 is an exploded perspective view explaining an example of a camera module fixing method according to the first embodiment of the present invention.
Fig. 4 is a sectional view of a camera module fixing structure according to a second embodiment of the present invention.
Fig. 5 is a sectional view explaining a conventional example of a camera module fixing method.
Fig. 6 is a sectional view showing another conventional example of a camera module fixing method.

### DESCRIPTION OF THE PREFERRED EMBODIMENTS

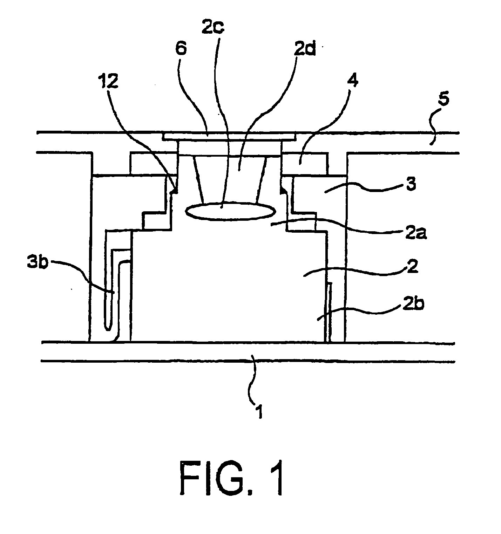

Hereinafter, embodiments of the present invention will be described with reference to the accompanying drawings. Fig. 1 is a sectional view of a camera module fixing structure according to a first embodiment of the present invention, and Fig. 2 is a detailed sectional view of the camera module 2 shown in Fig. 1. In Figures 1 and 2, parts equivalent to those in Figs. 5 and 6 are designated by the same reference numerals. Referring first to Fig. 2, in the camera module 2, an imager 10 including a sensor, a digital signal processor (DSP) or the like, is mounted on, e.g., a ceramic substrate 8, and this imager 10 is connected to an circuit on the ceramic substrate 8 by wire bondings 9. A base portion 2b having an IR (infrared rays) cut glass 11 is adhesively fixed to the ceramic substrate 8.

The lens barrel portion 2a with the lens 2c has a thread groove on the outer peripheral surface thereof. A focus adjustment is performed by fitting this thread groove into the thread portion 2e inside the base portion 2b while screwing the base portion 2b. After that, an adhesive 12 is poured into the small gap between the thread portion 2e and the thread groove on the outer peripheral surface of the lens barrel portion 2a, thereby fixing the lens barrel portion 2a to the base portion 2b.

Referring to Fig. 1, the camera module 2 is inserted into the holding frame 3 to be held. Here, a fixing rib 3b for abutting against the base portion 2b of the camera module 2 is mounted inside the holding frame 3. By constituting this fixing rib 3b by an elastic material, the fixing rib presses the outer peripheral surface of the base portion 2b to resiliently urge it. As a result, the camera module 2 is automatically positioned in the holding frame 3 to be held.

The lens barrel portion 2a of the camera module 2 is projected from the holding frame 3, and a doughnut-shaped (cylindrical) cushion member (made of rubber or sponge; hereinafter abbreviated as a "cushion") 4 is fitted over the outer peripheral surface of the above-described projected lens barrel portion 2a. The holding frame 3 holding the camera module 2 of which the lens barrel portion 2a has the cushion 4 fitted thereinto, is sandwichedly fixed between the substrate 1 and the apparatus enclosure 5.

Here, by setting the thickness of the cushion 4 to be larger than the gap between the top surface of the holding frame 3 and the bottom surface of the apparatus enclosure 5 in the fixing structure in Fig. 1, the cushion 4 becomes a press-fitted state when the holding frame 3 is sandwichedly fixed between the substrate 1 and the apparatus enclosure 5. This allows the protection of the camera module 2 from the intrusion of refuse or dust into the lens hole 2d thereof.

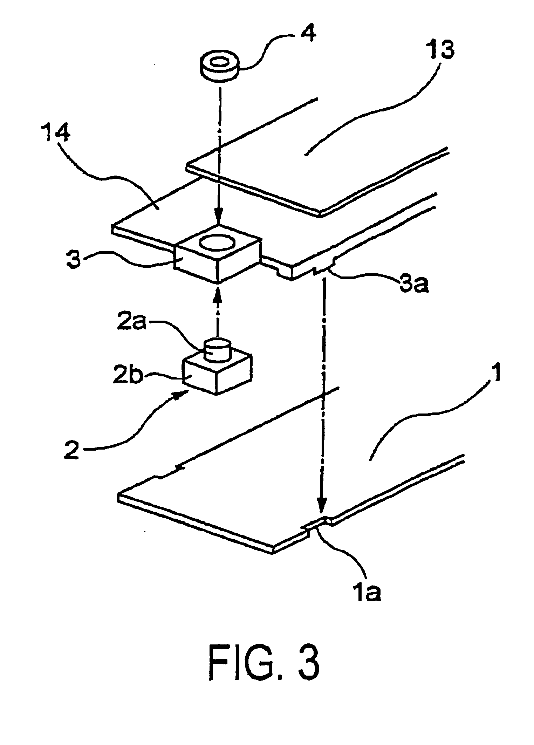

Fig. 3 is a schematic exploded perspective view explaining an assembly method for obtaining the fixing structure shown in Fig. 1. Referring to Fig. 3, the camera module 2 is press-fitted from below into the holding frame 3 until the top surface of the base portion 2b of the camera module 2 makes contact with the inside of the holding frame 3. At this time, the fixing rib 3b performs the function of resiliently urging the base portion 2b in the direction perpendicular to the optical axis of the lens 2c, with the base portion 2b being in contact with the fixing rib 3b of the holding frame 3. Thus, the camera module 2 is fitted into the holding frame 3 while being automatically positioned, as shown in Fig. 1.

Here, an mobile phone is taken as an example of an apparatus into which the camera module 2 is to be incorporated. The camera module 2 is mounted to an LCD mounting frame 14 for mounting a LCD display portion 13. Herein, the holding frame 3 is, in advance, integrally formed with the LCD mounting frame 14 in one piece, and the camera module 2 is fitted into the holding frame 3. Then, a frame fixing claw 3a is fitted into a frame fixing notch portion 1 a of the substrate 1. Thereby, the camera module 2 is fixed to the substrate 1 via the LCD mounting frame 14.

After that, the cushion 4 is fitted over the outer peripheral surface of the lens barrel portion 2a of the camera module 2. At this time, as shown in Fig. 1, the bottom surface of the cushion 4 is fixed in contact with the top surface of the holding frame 3. Here, for the purpose of protecting the cushion 4 from the intrusion of foreign matter such as refuse or dust, it is desirable that the cushion 4 have such a size as to be somewhat press-fitted, in order to inhibit the occurrence of a gap between the cushion 4 and the outer peripheral surface of the lens barrel portion 2a.

Lastly, while not shown in Fig. 3, the apparatus enclosure 5 is mounted to the substrate 1, and at this time, the holding frame 3 is sandwichedly fixed between the apparatus enclosure 5 and the substrate 1. At this time, the cushion 4 is held by being sandwiched and pressure-fitted between the apparatus enclosure 5 and the holding frame 3. This eliminates the need for a double-sided tape for fixing the cushion 4. However, the double-sided tape 7 may also be used in order to make more perfect the fixation between the cushion 4 and the apparatus enclosure 5.

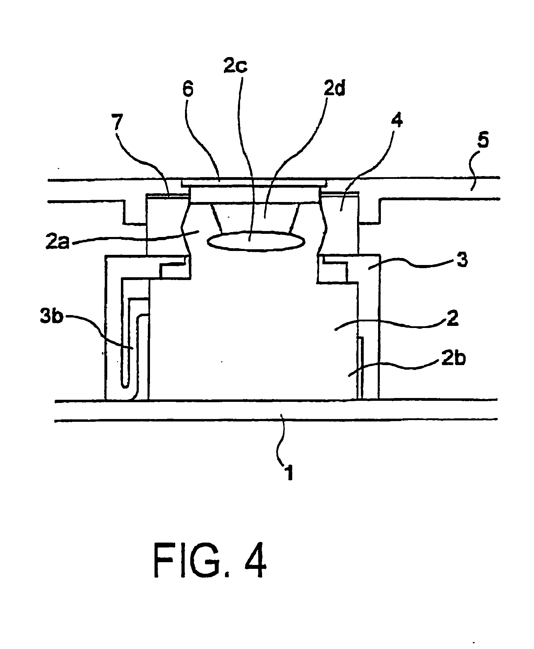

Fig. 4 is a sectional view of a camera module fixing structure according to a second embodiment of the present invention. Parts equivalent to those in Fig. 1 are designated by the same reference numerals. In this embodiment, although the basic construction thereof is the same as that in the above-described first embodiment, a new design idea has been incorporated into the lens barrel portion 2a of the camera module 2. That is, as shown in Fig. 4, the shape of the lens barrel portion 2a is modified to be a shape different from that in Fig. 1.

Specifically, as an outer peripheral surface of the lens barrel portion including the optical axis of a lens, there is provided a modified outer peripheral surface having a sectional surface shape different from a rectangle as shown in Fig. 1. In the example shown in Fig. 4, the sectional surface of the modified outer peripheral surface of the lens barrel portion has a shape of which the diameter is at the maximum in the midsection, and gradually decreases from the midsection to the upward and downward directions. Thus modifying the shape of the lens barrel portion 2a of the camera module 2 to be such a shape different from a common, cylindrical shape, prevents the cushion 4 from falling off after having been fitted over the lens barrel portion 2a, resulting in improved adhesive property of the cushion 4.

Furthermore, by providing the double-sided tape 7 to the contact surface between the top surface of the cushion 4 and the apparatus enclosure 5, the space surrounded by the screen 6, the upper portion of the lens hole 2d, and the apparatus enclosure 5 can be perfectly enclosed. This enables the camera module 2 to be prevented from the intrusion of refuse or dust into the lens barrel portion 2a of the camera module 2 from the side surface of the lens barrel portion 2a, and the function of performing perfect dust prevention to be achieved.

Since the camera module fixing method according to the present invention is a mounting method in which the cushion 4 is press-fitted between the holding frame 3 and the apparatus enclosure 5, the lens barrel portion 2a of the camera module 2 are prevented from being directly subjected to a load even when a shock or pressure through the screen 6 is applied, which allows a reliable protection of the lens barrel portion 2a.

The shape of the outer peripheral surface of the lens barrel portion 2a is not limited to the illustrated example, but may include any other shape that allows the cushion 4 to be prevented from falling off. For example, a shape having asperities on the outer peripheral surface of lens barrel portion 2a may also be employed. The present invention is not only applicable to mobile phones, but also extensively applicable to portable terminal devices having a camera function, such as a digital camera.

## Claims

1. A camera module fixing structure configured to fix a camera module (2) to an apparatus having a substrate (1) and an enclosure (5), the camera module fixing structure comprising:
a holding frame (3) adapted to hold the camera module (2), and to be sandwichedly fixed between the substrate (1) and the enclosure (5) of the apparatus; and
a cushion member (4) adapted to be fitted over the outer peripheral surface of a lens barrel portion (2a) of the camera module (2);
**characterized in that**
the cushion member (4) is adapted to be press-fitted between the holding frame (3) and the enclosure (5), when the holding frame (3) is sandwichedly fixed between the substrate (1) and the enclosure (5) of the apparatus.

2. The camera module fixing structure according to claim 1, configured to fix a camera module (2) having a lens barrel portion (2a) with an outer peripheral surface including the optical axis of a lens, the outer peripheral surface having a shape different from a cylindrical shape, wherein the cushion member (4) is configured to fit over said outer peripheral surface having a shape different from a cylindrical shape.

3. The camera module fixing structure according to claim 1, further comprising a double-sided adhesive tape (7) adapted to be provided to the contact surface between the cushion member (4) and the enclosure (5) of the apparatus.

4. The camera module fixing structure according to claim 1, configured to fix a camera module (2) configured to be held by being inserting into the holding frame (3)
wherein the holding frame (3) is adapted to hold the camera module (2) inserted into the holding frame (3); and
wherein an elastic rib (3b) for positioning is provided between an inner peripheral surface of the holding frame (3) and the outer peripheral surface of the camera module (2).

5. The camera module fixing structure according to claim 1,
wherein the holding frame (3) and a display member mounting frame (14) for mounting a display member (13) in the apparatus are integrally formed in one piece.

6. An apparatus, comprising
a substrate (1);
an enclosure (5);
a camera module (2); and
a camera module fixing structure;
**characterized in that**
the camera module fixing structure is according to claim 1.

7. The apparatus according to claim 6, further comprising
a display member (13);
a display member mounting frame (14) for mounting the display member (13) in the apparatus; wherein
the holding frame (3) of the camera module fixing structure and the display member mounting frame (14) are integrally formed in one piece.

8. The apparatus according claim 6, wherein
the enclosure (5) comprises a recess for fitting the cushion member (4); and the camera module (2) is held via the cushion member (4) with the enclosure (5).

9. The apparatus according claim 6, wherein
the camera module (2) having a lens barrel portion (2a) with an outer peripheral surface including the optical axis of a lens, the outer peripheral surface having a shape different from a cylindrical shape; and
the cushion member (4) is configured to fit over said outer peripheral surface having a shape different from a cylindrical shape.

10. The apparatus according to claim 6, further comprising a double-sided adhesive tape (7) provided to the contact surface between the cushion member (4) and the enclosure (5) of the apparatus.

11. The apparatus according to claim 6, wherein
the camera module (2) is inserted into the holding frame (3); and
an elastic rib (3b) for positioning is provided between an inner peripheral surface of the holding frame (3) and the outer peripheral surface of the camera module (2).

12. The apparatus according to 6, being a portable terminal, a mobile phone or a digital camera.

13. A camera module fixing method of fixing a camera module (2) to an apparatus having a substrate (1) and an enclosure (5), the method comprising the steps of:
inserting the camera module (2) into a holding frame (3); and
fitting a cushion member (4) over an outer peripheral surface of a lens barrel portion (2a) of the camera module (2);
**characterized by**
press-fitting the cushion member (4) between the holding frame (3) and the enclosure (5) of the apparatus while sandwichedly fixing the holding frame (3) between the substrate (1) and the enclosure (5) of the apparatus.

## Patentansprüche

1. Kameramodulbefestigungsstruktur, ausgelegt, um ein Kameramodul (2) an einer Vorrichtung zu befestigten, die ein Substrat (1) und ein Gehäuse (5) aufweist, wobei die Kameramodulbefestigungsstruktur (1) umfasst:
- einen Halterahmen (3), der zum Halten des Kameramoduls (2) und zur Befestigung zwischen dem Substrat (1) und dem Gehäuse (5) der Vorrichtung ausgelegt ist; und
- ein Pufferelement (4), das ausgelegt ist, über der äußeren peripheren Fläche eines Objektivtubusteils (2a) des Kameramoduls (2) angeordnet zu werden;
**dadurch gekennzeichnet, dass**
- das Pufferelement (4) ausgelegt ist, mit Druck zwischen dem Halterahmen (3) und dem Gehäuse (5) eingefügt zu werden, wenn der Halterahmen (3) zwischen dem Substrat (1) und dem Gehäuse (5) der Vorrichtung zwischen diesen befestigt ist.

2. Kameramodulbefestigungsstruktur nach Anspruch 1, ausgeführt, ein Kameramodul (2) zu befestigen, das einen Objektivtubusteil (2a) mit einer äußeren peripheren Fläche aufweist, die eine optische Achse eines Objektivs umfasst, wobei die äußere periphere Fläche eine Form hat, die sich von einer zylindrischen Form unterscheidet, wobei das Pufferelement (4) ausgeführt ist, über die äußere periphere Fläche mit einer sich von einer zylindrischen Form unterscheidenden Form zu passen.

3. Kameramodulbefestigungsstruktur nach Anspruch 1, ferner mit einem doppelseitigen Klebeband (7), das ausgelegt ist, der Kontaktfläche zwischen dem Pufferelement (4) und dem Gehäuse (5) der Vorrichtung bereitgestellt zu werden.

4. Kameramodulbefestigungsstruktur nach Anspruch 1, ausgelegt, ein Kameramodul (2) zu befestigen, das ausgeführt ist, um durch Einsetzen in den Halterahmen (3) gehalten zu werden,
- wobei der Halterahmen (3) ausgelegt ist, das in den Halterahmen (3) eingesetzte Kameramodul (2) zu halten; und
- wobei eine elastische Rippe (3b) zur Positionierung zwischen einer inneren peripheren Fläche des Halterahmens (3) und der äußeren peripheren Fläche des Kameramoduls (2) bereitgestellt ist.

5. Kameramodulbefestigungsstruktur nach Anspruch 1, wobei der Halterahmen (3) und ein Anzeigebauteilbefestigungsrahmen (14) zur Befestigung eines Anzeigebauteils (13) in der Vorrichtung baueinheitlich einteilig ausgebildet sind.

6. Vorrichtung, umfassend
- ein Substrat (1);
- ein Gehäuse (5);
- ein Kameramodul (2); und
- eine Kameramodulbefestigungsstruktur;
**dadurch gekennzeichnet, dass**
die Kameramodulbefestigungsstruktur gemäß Anspruch 1 ist.

7. Vorrichtung nach Anspruch 6, ferner mit
- einem Anzeigebauteil (13);
- einem Anzeigebauteilbefestigungsrahmen (14) zum Befestigen des Anzeigebauteils (13) in der Vorrichtung; wobei
- der Halterahmen (3) der Kameramodulbefestigungsstruktur und der Anzeigebauteilbefestigungsrahmen (14) baueinheitlich einteilig ausgebildet sind.

8. Vorrichtung nach Anspruch 6, wobei
- das Gehäuse (5) eine Ausnehmung zum Einpassen des Pufferelementes (4) umfasst; und
- das Kameramodul (2) über das Pufferelement (4) in dem Gehäuse (5) gehalten wird.

9. Vorrichtung nach Anspruch 6, wobei
- das Kameramodul (2) ein Objektivtubusteil (2a) mit einer äußeren peripheren Fläche aufweist, die eine optische Achse eines Objektivs umfasst, wobei die äußere periphere Fläche eine Form hat, die sich von einer zylindrischen Form unterscheidet; und
- das Pufferelement (4) ausgeführt ist, um über die äußere periphere Fläche mit einer sich von einer zylindrischen Form unterscheidenden Form zu passen.

10. Vorrichtung nach Anspruch 6, ferner mit einem doppelseitigen Klebeband (7), das ausgelegt ist, der Kontaktfläche zwischen dem Pufferelement (4) und dem Gehäuse (5) der Vorrichtung bereitgestellt zu werden.

11. Vorrichtung nach Anspruch 6, wobei
- das Kameramodul (2) in den Halterahmen (3) eingesetzt ist; und
- eine elastische Rippe (3b) zur Positionierung zwischen einer inneren peripheren Fläche des Halterahmens (3) und der äußeren peripheren Fläche des Kameramoduls (2) bereitgestellt ist.

12. Vorrichtung nach Anspruch 6, wobei die Vorrichtung ein mobiles Endgerät, ein Mobiltelefon oder eine Digitalkamera ist.

13. Kameramodulbefestigungsverfahren zum Befestigen eines Kameramoduls (2) an einer Vorrichtung, die ein Substrat (1) und ein Gehäuse (5) aufweist, wobei das Verfahren die Schritte umfasst:
- Einsetzen des Kameramoduls (2) in einen Halterahmen (3), und
- Einpassen des Pufferelements (4) über eine äußere periphere Fläche eines Objektivtubusteils (2a) des Kameramoduls (2),
**dadurch gekennzeichnet, dass**
- das Pufferelement (4) mit Druck zwischen dem Halterahmen (3) und dem Gehäuse (5) der Vorrichtung eingefügt wird, während der Halterahmen (3) zwischen dem Substrat (1) und dem Gehäuse (5) der Vorrichtung befestigt wird.

## Revendications

1. Structure de fixation de module de caméra configurée pour fixer un module de caméra (2) à un appareil comportant un substrat (1) et une enceinte (5), la structure de fixation de module de caméra comprenant :
un cadre de maintien (3) conçu pour maintenir le module de caméra (2), et pour être fixé en sandwich entre le substrat (1) et l'enceinte (5) de l'appareil ; et
un élément d'amortissement (4) conçu pour être assemblé sur la surface périphérique extérieure d'une partie de monture d'objectif (2a) du module de caméra (2) ;
**caractérisée en ce que**
l'élément d'amortissement (4) est conçu pour être assemblé par pression entre le cadre de maintien (3) et l'enceinte (5), lorsque le cadre de maintien (3) est fixé en sandwich entre le substrat (1) et l'enceinte (5) de l'appareil.

2. Structure de fixation de module de caméra selon la revendication 1, configurée pour fixer un module de caméra (2) comportant une partie de monture d'objectif (2a) avec une surface périphérique extérieure comprenant l'axe optique d'un objectif, la surface périphérique extérieure ayant une forme différente d'une forme cylindrique, dans laquelle l'élément d'amortissement (4) est configuré pour s'assembler sur ladite surface périphérique extérieure ayant une forme différente d'une forme cylindrique.

3. Structure de fixation de module de caméra selon la revendication 1, comprenant en outre une bande adhésive double-face (7) conçue pour être prévue sur la surface de contact entre l'élément d'amortissement (4) et l'enceinte (5) de l'appareil.

4. Structure de fixation de module de caméra selon la revendication 1, configurée pour fixer un module de caméra (2) configuré pour être maintenu en étant inséré dans le cadre de maintien (3) ;
dans laquelle le cadre de maintien (3) est conçu pour maintenir le module de caméra (2) inséré dans le cadre de maintien (3) ; et
dans laquelle une nervure élastique (3b) pour le positionnement est prévue entre une surface périphérique intérieure du cadre de maintien (3) et la surface périphérique extérieure du module de caméra (2).

5. Structure de fixation de module de caméra selon la revendication 1,
dans laquelle le cadre de maintien (3) et un cadre de montage d'élément d'affichage (14) pour monter un élément d'affichage (13) dans l'appareil sont formés intégralement en un seul élément.

6. Appareil, comprenant :
un substrat (1) ;
une enceinte (5) ;
un module de caméra (2) ; et
une structure de fixation de module de caméra ;
**caractérisé en ce que**
la structure de fixation de module de caméra est selon la revendication 1.

7. Appareil selon la revendication 6, comprenant en outre :
un élément d'affichage (13) ;
un cadre de montage d'élément d'affichage (14) pour monter l'élément d'affichage (13) dans l'appareil ; dans lequel
le cadre de maintien (3) de la structure de fixation de module de caméra et le cadre de montage d'élément d'affichage (14) sont formés intégralement en un seul élément.

8. Appareil selon la revendication 6, dans lequel
l'enceinte (5) comprend un évidement pour l'assemblage de l'élément d'amortissement (4) ; et
le module de caméra (2) est maintenu par l'intermédiaire de l'élément d'amortissement (4) par l'enceinte (5).

9. Appareil selon la revendication 6, dans lequel
le module de caméra (2) comporte une partie de monture d'objectif (2a) avec une surface périphérique extérieure comprenant l'axe optique d'un objectif, la surface périphérique extérieure ayant une forme différente d'une forme cylindrique ; et
l'élément d'amortissement (4) est configuré pour s'assembler sur ladite surface périphérique extérieure ayant une forme différente d'une forme cylindrique.

10. Appareil selon la revendication 6, comprenant en outre une bande adhésive double-face (7) prévue sur la surface de contact entre l'élément d'amortissement (4) et l'enceinte (5) de l'appareil.

11. Appareil selon la revendication 6, dans lequel
le module de caméra (2) est inséré dans le cadre de maintien (3) ; et
une nervure élastique (3b) pour le positionnement est prévue entre une surface périphérique intérieure du cadre de maintien (3) et la surface périphérique extérieure du module de caméra (2).

12. Appareil selon la revendication 6, qui est un terminal portable, un téléphone mobile ou une caméra numérique.

13. Procédé de fixation de module de caméra pour fixer un module de caméra (2) à un appareil comportant un substrat (1) et une enceinte (5), le procédé comprenant les étapes consistant à :
insérer le module de caméra (2) dans un cadre de maintien (3) ; et
assembler un élément d'amortissement (4) sur une surface périphérique extérieure d'une partie de monture d'objectif (2a) du module de caméra (2) ;
**caractérisé par**
une étape consistant à assembler par pression l'élément d'amortissement (4) entre le cadre de maintien (3) et l'enceinte (5) de l'appareil tout en fixant en sandwich le cadre de maintien (3) entre le substrat (1) et l'enceinte (5) de l'appareil.
